# EUROPEAN PATENT APPLICATION

(11) **EP 1 179 903 A1**
(43) Date of publication of application: **13.02.2002**
(21) Application number: 01912305.8
(22) Date of filing: 13.03.2001
(51) Int. Cl.: H04J 11/00

(54) **COMMUNICATION APPARATUS AND COMMUNICATION METHOD**

(30) Priority: 21.03.2000 JP 2000077916
(71) Applicant: MITSUBISHI DENKI KABUSHIKI KAISHA, Tokyo 100-8310 (JP)
(72) Inventor: MATSUMOTO,Wataru Mitsubishi Denki Kabushiki Kaisha, Chiyoda-ku, Tokyo 100-8310 (JP)
(74) Representative: Pfenning, Meinig & Partner
(86) International application number: JP0101953
(87) International publication number: WO0171955

(57) **Abstract**

A number of bits that can be allocated to each tone is calculated for each communication apparatus, an individual bit allocation is determined for each communication apparatus, and communication apparatuses are managed by being divided into masters and slaves . This makes it possible to secure a transmission rate without requiring labor and cost for the work of installing a blocking filter or the like, and to achieve connection between the low-speed communication apparatus and the high-speed communication apparatus.

## Description

### TECHNICAL FIELD

The present invention relates to a method of and an apparatus for carrying out data communications according to a multi-carrier (multi-tone) modulation/demodulation system such as a DMT (Discrete MultiTone) modulation/demodulation system or an OFDM (Orthogonal Frequency Division Multiplex) modulation/demodulation system that carries out data communications by allocating data to a plurality of tones. Particularly, this invention relates to a communication method for a plurality of communication apparatuses connected in multiplex to carry out data, sound and video communications at the same time, by using existing power lines, and a communication apparatus capable of realizing this communication method. However, the invention can be applied to all the communication apparatuses that carry out cable communications via normal communication lines and radio communications, not only to the communication apparatuses that carry out power-line communications.

### BACKGROUND ART

In recent years, multi-carrier communication systems like the DMT modulation/demodulation system and the OFDM modulation/demodulation system have been considered as modulation/demodulation systems in the cable digital communication system.

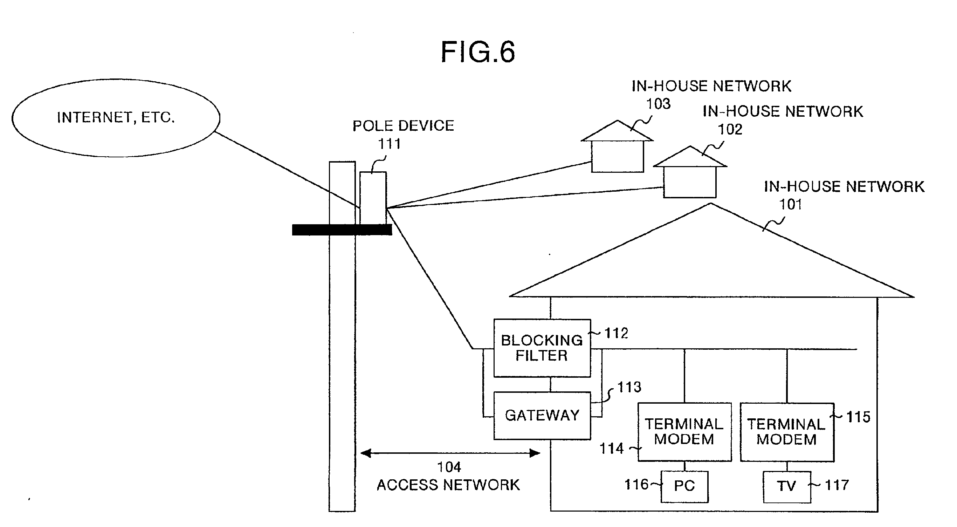

Fig. 6 is an explanatory diagram for explaining a system structure of power-line communications that carry out data communications according to the DMT modulation/demodulation system. In Fig. 6, reference numeral 101, 102, and 103 denote in-house networks, 104 denotes an access network for making access to the in-house networks 101, 102, and 103, and 111 denotes a pole device for controlling the distribution of data from the Internet or the like to the in-house networks via the access network. Reference numeral 112 denotes a blocking filter for avoiding a mutual interruption between the in-house networks 101, 102, and 103 and the access network 104, and 113 denotes a gateway for controlling terminals of the in-house networks 101, 102, and 103 respectively. Reference numerals 114 and 115 denote terminal modems for controlling communications between the gateway 113 and the terminals, and 116 and 117 denote terminals like a PC and a TV respectively.

The blocking filter 112 filters a high-frequency band to be used for data communications, thereby to avoid mutual interference between the access network 104 and the in-house networks 101, 102, and 103. The gateway 113 has disconnected electric connection between the access network 104 and the blocking filter 112, thereby to separately control the access network 104 and the in-house networks 101, 102, and 103.

However, in the case of realizing the conventional system structure as shown in Fig. 6, it is necessary to carry out the installation work of the blocking filter 112 and the gateway 113 for each in-house network, and this has been troublesome and costly.

Furthermore, in the data communications using the general OFDM modulation/demodulation system, there is considered a method of allocating the same number of bits to all the tones used in each communication apparatus. In this case, it is necessary to match the number of bits that can be allocated with the number of bits allocated to the tone that has the least number of allocation of bits among the number of bits that can be allocated to all tones. In other words, it is possible to increase the transmission rate when it is possible to cut noise of the frequency band that is used by the blocking filter 112 and secure sufficient number of bits to be allocated to all the tones. However, when the blocking filter 112 is not used in order to delete labor and cost, it is not possible to avoid mutual interference between the in-house networks 101, 102, and 103 and the access network 104. As a result, there occur tones to which the allocation number of bits is very small due to the influence of noise, or it is not possible to allocate bits. This has had a problem that it is not possible to increase the transmission rate.

Moreover, in the SS (Spread Spectrum) system or the like, there is considered a method of realizing a low-speed communication by using a bandwidth of 10 kHz and a high-speed communication by using a bandwidth of 100 kHz. However, as the bandwidths used for the low-speed communication and the high-speed communication are different, it is not possible to control, for example, a low-speed terminal modem for a low-speed communication apparatus with a high-speed communication gateway for a high-speed communication apparatus, or it is not possible to control a high-speed terminal modem for a high-speed communication apparatus with a low-speed communication gateway for a low-speed communication apparatus. Therefore, there has been a problem that it is not possible to connect between the low-speed communication apparatus and the high-speed communication apparatus.

Further, when a connection with the communication having a short data length of 64 to 1500 bytes for payload like the Ethernet is considered, there has been a problem that the influence of the length of the header field appears extremely in a reduction in a transmission rate.

The present invention has an object of providing a communication apparatus and a communication method capable of connecting between a low-speed communication apparatus and a high-speed communication apparatus by securing a transmission rate without taking much labor and cost in the work of installing a blocking filter or the like.

### DISCLOSURE OF THE INVENTION

The communication apparatus relating to one aspect of the present invention is a communication apparatus for carrying out data communications by allocating data to a plurality of tones, and this communication apparatus comprises: a bit allocation calculating unit which calculates a number of bits that can be allocated to each tone for each communication apparatus that becomes a communication party, at the time of a training for setting initialization information before carrying out data communications; and a data communication unit which carries out data communications to each communication apparatus that becomes the communication party based on the bit allocation calculated by the bit allocation calculating unit.

Further, the data communication unit carries out only data transmission.

Further, the data communication unit carries out only data reception.

The communication method relating to another aspect of the present invention is a communication method for carrying out data communications by allocating data to a plurality of tones, and this communication method comprises the steps of: calculating a number of bits that can be allocated to each tone for each communication apparatus that becomes a communication party, at the time of a training for setting initialization information before carrying out data communications; and carrying out data communications to each communication apparatus that becomes the communication party based on the bit allocation calculated.

Further, the communication apparatuses are managed by dividing them into masters and slaves.

Further, among the communication apparatuses that carry out communications, a communication apparatus that becomes a clock master for transmitting a synchronization signal is set, and the communication apparatuses other than the clock master receive a synchronization signal from the communication apparatus that becomes the clock master, and carry out synchronization.

Further, the plurality of tones having the same bandwidth are used.

### BRIEF DESCRIPTION OF THE DRAWINGS

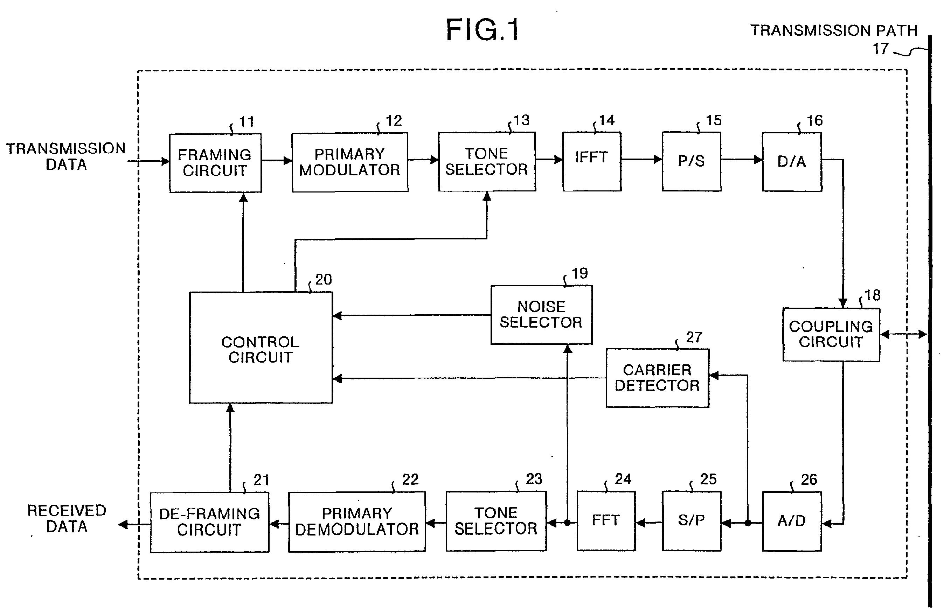

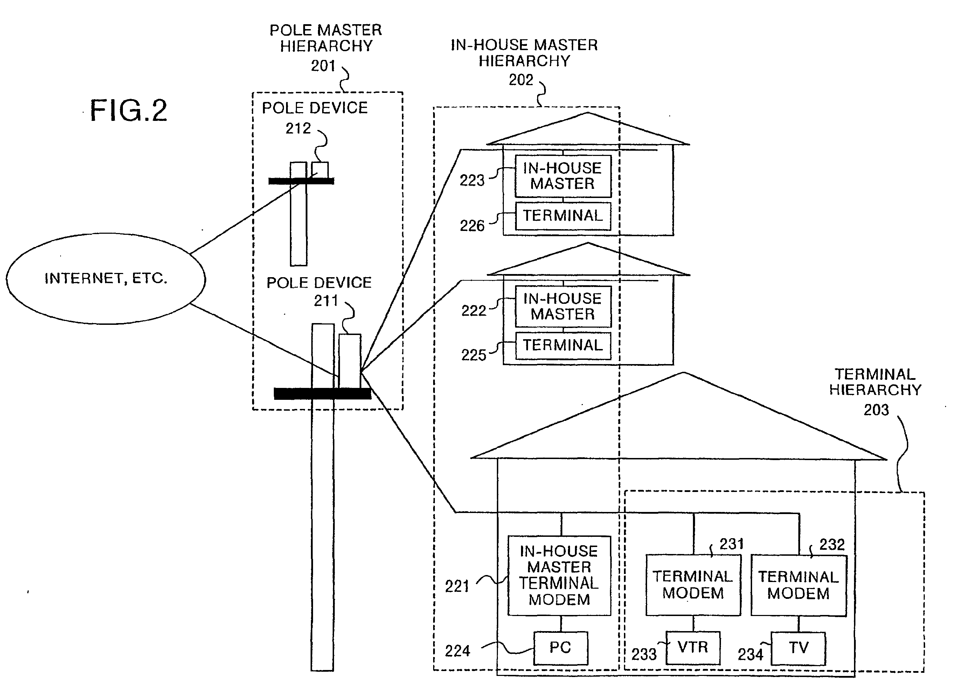

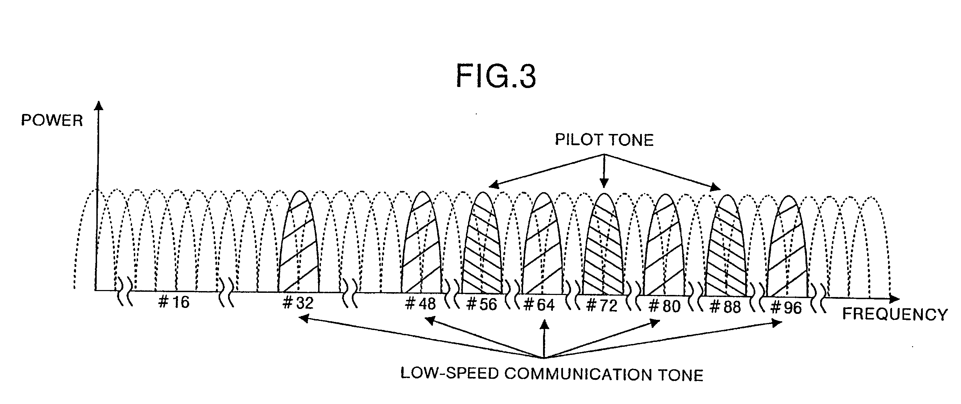

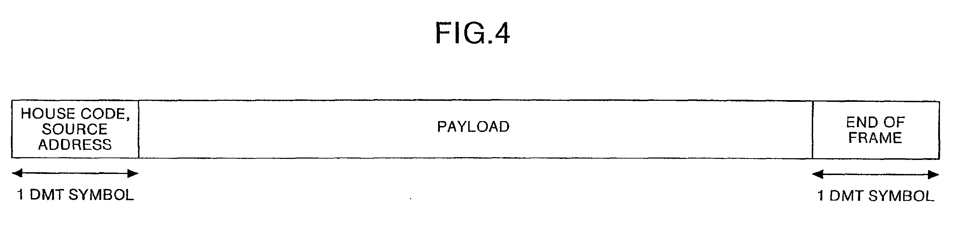

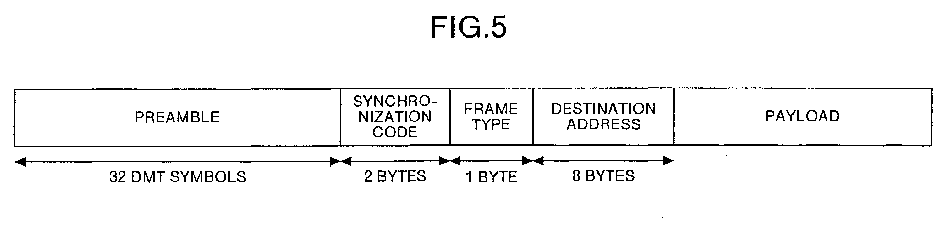

Fig. 1 is a functional structure diagram showing a structure of a communication apparatus relating to the present invention; Fig. 2 is an explanatory diagram for explaining a system structure of the communication apparatus relating to the present invention; Fig. 3 is an explanatory diagram showing an example of arrangement of tones when the communication apparatus relating to the present invention carries out data communications; Fig. 4 is an explanatory diagram showing an example of a structure of a frame when the communication apparatus relating to the present invention carries out data communications; Fig. 5 is an explanatory diagram showing an example of a structure of a frame when all communication apparatuses use a common tone and a common bit allocation; and Fig. 6 is an explanatory diagram for explaining a system structure of a conventional communication apparatus.

### BEST MODE FOR CARRYING OUT THE INVENTION

### First Embodiment:

Fig. 1 is a functional structure diagram showing a structure of a communication apparatus for carrying out communications according to a multi-carrier modulation/demodulation system, such as for example, a pole device and a terminal modem. In the present embodiment, a communication apparatus for carrying out power-line communications will be explained. However, the communication apparatus is not limited to this so long as the communication apparatus carries out communications according to a multi-carrier modulation/demodulation system. It is also possible to apply the invention to all communication apparatuses that carry out cable communications and radio communications via normal communication lines.

In Fig. 1, reference numeral 11 denotes a framing circuit, 12 denotes a primary modulator, 13 denotes a tone selector, 14 denotes an inverse fast Fourier transform circuit (IFFT), 15 denotes a parallel/serial converter circuit (P/S), 16 denotes a digital/analog converter circuit (D/A), 17 denotes a transmission path (a power line), 18 denotes a coupling circuit, 19 denotes a noise measurer, 20 denotes a control circuit, 21 denotes a de-framing circuit, 22 denotes a primary demodulator, 23 denotes a tone selector, 24 denotes a fast Fourier transform circuit (FFT), 25 denotes a serial/parallel converter circuit (S/P), 26 denotes an analog/digital converter circuit (A/D), and 27 denotes a carrier detector.

The framing circuit 11, the primary modulator 12, the tone selector 13, the IFFT 14, the P/S 15, and the D/A 16 constitute a transmission system. The A/D 26, the S/P 25, the FFT 24, the tone selector 23, the primary demodulator 22, and the de-framing circuit 21 constitute a receiving system. The transmission system and the receiving system correspond to data communication unit, and the control circuit 20 has bit allocation calculating unit.

Next, the operation will be explained.

First, the operation of the transmission system will be explained. For example, when transmission data has been input from a data processing unit (not shown) like a personal computer connected to the communication apparatus, the framing circuit 11 carries out a framing processing, and outputs this frame to the primary modulator 12. Then, the primary modulator 12 modulates the received frame with the DBPSK or DQPSK system assigned by primary modulation/demodulation system selection information from the control circuit 20, encodes the frame into each tone of a multi-carrier modulation system, and outputs the signal to the tone selector 13.

Thereafter, the tone selector 13 selects a tone based on the information from the control circuit 20, and outputs the tone to the IFFT 14. Then, the IFFT 14 inversely Fourier transforms the received tone, thereby to transform the frequency axis data into time axis data, and outputs this data to the P/S 15.

The P/S 15 converts the parallel data output from the IFFT 14 into serial data, and outputs this serial data to the D/A 16. Last, the D/A 16 carries out a digital/analog conversion to this serial data, and transmits this analog signal to other communication apparatus (not shown) connected to the power line 17, via the coupling circuit 18 and the power line 17.

Next, the operation of the receiving system will be explained. First, when the multi-carrier data has been transmitted from the transmission system as described above, the receiving system of the other communication apparatus carries out the operation opposite to the operation of the transmission system, and demodulates the data. More specifically, first, the multi-carrier data transmitted from the communication apparatus at the transmission side is taken in, and the A/D 26 carries out an analog/digital conversion. Then, the carrier detector 27 detects a carrier based on carrier sense and tone detection, and then establishes a symbol synchronization. Then, the S/P 25 converts the serial data converted into digital data, into parallel data, and outputs this data to the FFT 24.

The FFT 24 carries out Fourier transformation to the parallel data, thereby to transform the multi-carrier data on the time axis into data on the frequency axis, and outputs this data on the frequency axis to the tone selector 23 and the noise measurer 19. Thereafter, the tone selector 23 selects a tone assigned by the control circuit 20, and outputs this data to the primary demodulator 22. Then, the primary demodulator 22 demodulates the data in each tone according to the primary modulation system assigned by primary modulation/demodulation selection information from the control circuit 20.

Last, the de-framing circuit 21 carries out a de-framing processing to the primary demodulated data, thereby to generate received data, and outputs the received data to a device (not shown) connected to this communication apparatus. The de-framing processing is a processing opposite to the framing processing carried out by the framing circuit 11. This processing refers to a processing of isolating the header, and combining only data fields, that is, the processing of re-structuring the received data into the original form of the transmission data.

Fig. 2 is an explanatory diagram for explaining a system structure of the communication apparatus relating to the present invention. In Fig. 2, 201 denotes a pole master hierarchy, 202 denotes an in-house master hierarchy, 203 denotes a terminal hierarchy, 211 and 212 denotes pole devices, 221, 222, and 223 denote in-house modems as in-house masters, 224, 225, and 226 denote terminals like PCs, 231 and 232 denote terminal modems, and 233 and 234 denote terminals like a VTR and a TV.

In Fig. 2, the blocking filter 112 shown in Fig. 6 is not used. With this arrangement, it is possible to solve the problem of labor and cost. However, it is necessary to avoid mutual interference between the in-house networks 101, 102, and 103 and the access network 104. Therefore, according to a first embodiment, a number of bits that can be allocated to each tone is calculated for each communication apparatus, and an individual bit allocation is determined for each communication apparatus. Based on the determination of individual bit allocation for each communication apparatus, it is possible to allocate bits to other tones having small influence of noise, when it is not possible to allocate the bits to a part of tones due to the influence of noise. As a result, it is possible to secure a transmission rate.

However, when the pole device 111 manages all communication apparatuses, it is necessary that the pole device 111 stores bit allocations to all the communication apparatuses, and this becomes a large load to the pole device 111.

Accordingly, in Fig. 2, there are masters and slaves in three hierarchies of a pole master hierarchy 201, an in-house master hierarchy 202, and a terminal hierarchy 203. The pole device 211 in the pole master hierarchy 201 manages the in-house masters 221, 222, and 223 in the in-house master hierarchy 202. The in-house master terminal modem 221 in the in-house master hierarchy 202 manages the terminals like the VTR 233 and the TV 234 via the terminal modems 231 and 232 in the terminal hierarchy 203.

With the above arrangement, the pole device 211 may manage only the in-house masters 221, 222, and 223, and the in-house master terminal modem 221 may manage only the terminals 233 and 234 within the same house, via the terminal modems 231 and 232. As a result, it is possible to disperse the load for managing an enormously large number of communication apparatuses.

Detailed operation of each apparatus for realizing the system structure as shown in Fig. 2 will be explained below.

In the training to be carried out before starting the data communications, it is determined how many bits can be allocated to each of a plurality of tones of a preset frequency band, based on the S/N (signal-to-noise) ratio of a transmission path. As a method of measuring this S/N ratio, there is considered a method that a known transmission pattern of which tones are all the same power is transmitted at the training time, and power volume of noise in the received value is measured at the receiving time, thereby to calculate the S/N ratio. This training pattern is transmitted as follows. The framing circuit 11 at the transmission side carries out a processing of including the information that means a training pattern signal, for example, and also carries out a processing of including training data in the data field. Thereafter, the output is made to the transmission path 17 by the above processing. When the training pattern has been received at the receiving side, the noise measurer 19 measures noise from the output from the FFT 24 of the received training pattern, and a measured result is output to the control circuit 20, thereby to measure the S/N ratio.

Namely, training is carried out between the pole device 211 and the in-house master 221, between the pole device 211 and the in-house master 222, and between the pole device 211 and the in-house master 223, respectively. The subsequent data communications are carried out using the bit allocations determined by each training. In other words, the pole device 211 as the pole master stores the bit allocations at the time of carrying out transmission to/reception from the in-house masters 221, 222, and 223 respectively. Further, the in-house masters 221, 222, and 223 store respectively the bit allocations at the time of carrying out transmission to/reception from the pole device 211.

A similar operation is also carried out between the pole device 221 as the in-house master and the terminals 231 and 232 in the terminal hierarchy 203 respectively.

Then, communications are carried out between the communication apparatuses, by using the bit allocations determined by the above training.

As explained above, the number of bits that can be allocated to each tone is calculated for each communication apparatus, the individual bit allocation is determined for each communication apparatus, and the communication apparatuses are managed by dividing them into masters and slaves. Therefore, it is possible to carry out communications based on optimum bit allocation to each communication apparatus. Further, the blocking filter is not necessary, and it becomes possible to secure a transmission rate without requiring labor and cost for installation work.

In the first embodiment, the description has been made about a communication apparatus that carries out both transmission and reception. However, it is also possible to obtain similar effects when the communication apparatus carries out only transmission or when the communication apparatus carries out only reception.

Further, in the first embodiment, the description has been made of the case where the communication apparatuses are divided into masters and slaves in three hierarchies. However, when the communication apparatuses are managed by dividing them into masters and slaves, it is also possible to obtain similar effects regardless of the number of hierarchies.

### Second Embodiment:

In a second embodiment, the layout of tones for carrying out data communications will be explained.

Fig. 3 is an explanatory diagram showing an example of the layout of tones when the communication apparatus relating to the present invention carries out data communications. Fig. 3 shows a case where 102 tones having the same bandwidth are used within a range from 12.9735 kHz to 448.5 kHz, using a frequency interval of 4.3125 kHz between the center frequencies of the tones. Among the 102 tones, #56, #72, and #88 are used as pilot tones that are tones for symbol synchronization. #32, # 48, #64, #80, and #96 are used as low-speed communication tones, and other tones are used as high-speed communication tones. However, during high-speed communications, the pilot tones are used as high-speed communication tones.

Symbol synchronization is carried out based on the tone layout as shown in Fig. 3, and based on the pole master hierarchy 201 as the clock master. In other words, the pole device 2211 always transmits the pilot tones as the symbol synchronization tones to the in-house masters 221, 222, and 223 and the terminal modems 231 and 232 that are to be managed, during the period while data communications are not being carried out. The in-house masters 221, 222, and 223 and the terminal modems 231 and 232 receive the pilot tones, and carry out symbol synchronization.

Based on the tone layout as shown in Fig. 3, the bandwidth of the tones used in the high-speed communications and the bandwidth of the tones used in the low-speed communications become the same. Further, the apparatuses that carry out high-speed communications such as the in-house masters 221, 222, and 223, for example, and the apparatuses that carry out low-speed communications such as the terminal modems 231 and 232, for example, receive the pilot tones transmitted from the pole device 211, thereby to carry out symbol synchronization. Therefore, it is possible to realize low-speed communications and high-speed communications by only changing the tones to be used. Further, no deviation occurs in the symbol synchronization, and no mutual interference occurs even when the high-speed communication tones and the low-speed communication tones are adjacent to each other as shown in Fig. 3.

As explained above, it is possible to realize the low-speed communications and high-speed communications by only changing the tones to be used, based on the symbol synchronization by receiving the pilot tones transmitted from the clock master, and based on the use of tones having the same bandwidth for both the high-speed communication and low-speed communication. Further, no mutual interference occurs even when the high-speed communication tones and the low-speed communication tones are adjacent to each other. Therefore, it is possible to achieve mutual connection between the low-speed communication apparatus and the high-speed communication apparatus.

In the second embodiment, the tone layout as shown in Fig. 3 is employed. However, the tone layout is not limited to this, when the symbol synchronization is carried out using the synchronization signal of the clock master, and when the tones of the same bandwidth are used for both high-speed communications and low-speed communications. It is also possible to obtain similar effects by using other tone layout.

### Third Embodiment:

In a third embodiment, the frame structure for carrying out data communications will be explained.

Fig. 4 is an explanatory diagram showing an example of a structure of a frame generated in the framing processing by the framing circuit 11. In Fig. 4, symbol synchronization is carried out using pilot tones. A header necessary for one payload data includes two symbols of one DMT symbol used for a house code and a source address, and one DMT symbol used for an end of frame. However, when necessary, two or more DMT symbols may be used for the house code and the source address.

On the hand, when tones and bit allocation common to all the communication apparatuses are used, for example, a preamble is necessary for carrying out carrier detection and symbol synchronization in all the communication apparatuses.

Fig. 5 is an explanatory diagram showing an example of a structure of a frame when all communication apparatuses use a common tone and a common bit allocation.

In Fig. 5, a preamble and a synchronization code are necessary for carrier detection and symbol synchronization. However, in the communication apparatus relating to the present invention shown in Fig. 4, these headers are not necessary, as symbol synchronization is carried out using the pilot tones. In place of using the frame type in Fig. 5, the communication apparatus relating to the present invention shown in Fig. 4 uses the end of frame. Further, while only a destination address is used in Fig. 5, the communication apparatus relating to the present invention shown in Fig. 4 uses the house code and the source address as the header to indicate that data is from which master to which slave, or from which slave to which master.

Based on the above frame structure, communication apparatuses like the in-house masters 221, 222, and 223 and the terminal modems 231 and 232 that are about to start data transmission can transmit the data after a lapse of "fixed time + random time" since the reception of the end of file. Then, the pole device 211 as the clock master stops the transmission of the pilot tone immediately after the reception of the frame transmitted from the high-speed communication apparatus like the in-house masters 221, 222, and 223, and starts the transmission of the pilot tone immediately after the reception of the end of file.

As a result, in Fig. 5, the header necessary for one payload data includes 32 DMT symbols that are used for the preamble, and one to three symbols that are used for the synchronization code, the frame type, and the destination address. Thus, the header requires 33 DMT symbols at minimum. Based on the frame structure that is used in the communication apparatus relating to the present invention shown in Fig. 4, it is possible to shorten the header necessary for one payload data by more than 30 DMT symbols so that it is possible to restrict a reduction in the transmission rate, as compared with the case of using tones and bit allocation that are common to all the communication apparatuses.

As explained above, the preamble becomes unnecessary by carrying out symbol synchronization based on the reception of pilot tones that are transmitted from the clock master. Therefore, it is possible to shorten the header that is necessary for one payload data, and it becomes possible to restrict a reduction in the transmission rate.

In the third embodiment, the frame structure as shown in Fig. 4 is used. However, the structure is not limited to this, when the symbol synchronization is carried out using the synchronization signal of the clock master. It is also possible to obtain similar effects using other frame structure.

As explained above, according to the communication apparatus relating to the present invention, in a communication apparatus for carrying out data communications by allocating data to a plurality of tones, this communication apparatus comprises: a bit allocation calculating unit which calculates a number of bits that can be allocated to each tone for each communication apparatus that becomes a communication party, at the time of a training for setting initialization information before carrying out data communications; and a data communication unit which carries out data communications to each communication apparatus that becomes the communication party based on the bit allocation calculated by the bit allocation calculating unit. Based on this, it is possible to carry out communications based on optimum bit allocation to each communication apparatus. Further, the blocking filter is not necessary, and it becomes possible to secure a transmission rate without requiring labor and cost for installation work.

Further, according to the communication method relating to the present invention, in a communication method for carrying out data communications by allocating data to a plurality of tones, this communication method comprises the steps of: calculating a number of bits that can be allocated to each tone for each communication apparatus that becomes a communication party, at the time of a training for setting initialization information before carrying out data communications; and carrying out data communications to each communication apparatus that becomes the communication party based on the bit allocation calculated. Based on this, it is possible to carry out communications based on optimum bit allocation to each communication apparatus. Further, the blocking filter is not necessary, and it becomes possible to secure a transmission rate without requiring labor and cost for installation work.

Further, based on the management of communication apparatuses by dividing them into masters and slaves, it is possible to disperse the load for managing an enormously large number of communication apparatuses.
Further, among the communication apparatuses that carry out communications, a communication apparatus that becomes a clock master for transmitting a synchronization signal is set, and the communication apparatuses other than the clock master receive a synchronization signal from the communication apparatus that becomes the clock master, and carry out synchronization. Therefore, it is possible to shorten the header necessary for one payload data, and it is possible to restrict a reduction in the transmission rate .

Further, based on the use of the plurality of tones having the same bandwidth, it is possible to realize low-speed communications and high-speed communications, by only changing the tones to be used. Further, as no mutual interference occurs even when the high-speed communication tones and the low-speed communication tones are adjacent to each other, it is possible to connect between the low-speed communication apparatus and the high-speed communication apparatus.

### INDUSTRIAL APPLICABILITY

As explained above, according to the communication apparatus and the communication method relating to the present invention, they are suitable for carrying out data communications according to the multi-carrier (multi-tone) modulation/demodulation system like the DMT modulation/demodulation system and the OFDM modulation/demodulation system that carry out data communications by allocating data to a plurality of tones. They can secure a transmission rate without requiring labor and cost for the work of installing a blocking filter or the like, and are effective for connection between the low-speed communication apparatus and the high-speed communication apparatus.

## Claims

1. A communication apparatus for carrying out data communications by allocating data to a plurality of tones, the communication apparatus comprising:
a bit allocation calculating unit which calculates a number of bits that can be allocated to each tone for each communication apparatus that becomes a communication party, at the time of a training for setting initialization information before carrying out data communications; and
a data communication unit which carries out data communications to each communication apparatus that becomes the communication party based on the bit allocation calculated by the bit allocation calculating unit.

2. The communication apparatus according to claim 1, wherein the data communication unit carries out only data transmission.

3. The communication apparatus according to claim 1, wherein the data communication unit carries out only data reception.

4. A communication method of carrying out data communications by allocating data to a plurality of tones, the communication method comprising steps of:
calculating a number of bits that can be allocated to each tone for each communication apparatus that becomes a communication party, at the time of a training for setting initialization information before carrying out data communications; and
carrying out data communications to each communication apparatus that becomes the communication party based on the bit allocation calculated.

5. The communication method according to claim 4, wherein
among the communication apparatuses that carry out communications, a communication apparatus that becomes a clock master for transmitting a synchronization signal is set, and the communication apparatuses other than the clock master receive a synchronization signal from the communication apparatus that becomes the clock master, and carry out synchronization.

6. The communication method according to claim 5, wherein
the plurality of tones having the same bandwidth are used.

7. The communication method according to claim 4, wherein
the communication apparatuses are managed by dividing them into masters and slaves.

8. The communication method according to claim 7, wherein
among the communication apparatuses that carry out communications, a communication apparatus that becomes a clock master for transmitting a synchronization signal is set, and the communication apparatuses other than the clock master receive a synchronization signal from the communication apparatus that becomes the clock master, and carry out synchronization.

9. The communication method according to claim 8, wherein
the plurality of tones having the same bandwidth are used.
